# EUROPEAN PATENT SPECIFICATION

(11) **EP 0 821 783 B1**
(45) Date of publication and mention of the grant of the patent: **15.01.2003**
(21) Application number: 96910105.4
(22) Date of filing: 18.04.1996
(51) Int. Cl.: G01N 17/02, G01N 27/30

(54) **REFERENCE ELECTRODE**
REFERENZELEKTRODE
ELECTRODE DE REFERENCE

(30) Priority: 19.04.1995 GB 9507956
(43) Date of publication of application: 04.02.1998
(73) Proprietor: ALCAN INTERNATIONAL LIMITED, Montreal Quebec H3A 3G2 (CA)
(72) Inventor: BOOMER, Douglas, Ronald, Northville, MI 48167-1565 (US); NEWTON, Christopher, John, Banbury, Oxfordshire OX16 9NX (GB); HAINES, Jonathan, Paul, Northamptonshire NN11 6DG (GB); SHARMAN, Jonathan, David, Brereton, Banbury, Oxfordshire OX16 0TR (GB)
(74) Representative: Wise, Stephen James
(86) International application number: GB9600931
(87) International publication number: WO96033398

(56) References cited:
- EP-A- 0 068 025
- EP-A- 0 174 768
- EP-A- 0 215 178
- EP-A- 0 396 366
- DE-A- 2 845 751

## Description

The present invention relates to a reference electrode, particularly, but not exclusively for use in the measurement of the electrochemical potential of metal in a hot caustic liquid. Preferably the reference electrode is for use in the measurement of electrochemical potential in the caustic solution used to extract aluminium from bauxite in industrial plants using the Bayer process, hereinafter referred to as "Bayer process liquor".

Plants which operate using the Bayer process impose a very harsh environment for the materials of construction of the plant. Not only are Bayer process liquors generally comprised of up to 10 M caustic soda at temperatures up to 250ºC, but they also contain coarse abrasive particles and flow rapidly through pipework or else boil violently in heat exchangers and flash tanks. Furthermore, many sections of a Bayer plant are subjected to frequent cleaning processes using strong acid in order to remove deposits of accumulated scale. Frequent replacement of corroded and eroded parts of a Bayer plant constitute a considerable expense, not only because of the cost of the materials and the labour involved, but also as a result of the direct expense of lost production and the indirect expense of decreased operational efficiency caused by partial plant shut-downs.

Since the rate of corrosion of metals in aqueous solutions is directly related to the electrochemical potential of the metal in the solution, it is possible by knowing a metal's electrochemical potential to predict to some extent its rate of corrosion. It is therefore desirable to be able to monitor regularly, and even continuously, the electrochemical potential of metal in Bayer process liquor in the pipework, heat exchangers, flash tanks and other vessels of the Bayer plant through which the liquors pass.

In order to measure a metal's electrochemical potential, a reference electrode has to be used, along with a probe for that metal and a measuring device such as a high impedence (e.g. > 10¹² Ω) digital volt meter. However, because of the high temperature and extremely aggressive environment of Bayer plants, conventional reference electrodes are not suitable and may last only a matter of hours in contact with Bayer process liquor before being rendered useless because of chemical attack, loss of mercury (when an Hg/HgO cell is used), degradation of the electrode housing, etc.

Zirconia is known to be resistant to caustic attack and L.W. Nidrach describes in an article, commencing on page 2122 of the Journal of the Electrochemical Society (J. Electrochem. Soc.) dated October 1980, a membrane-type sensor for use in high temperature/high pressure water such as geothermal brines. With this sensor measurement is achieved by means of an oxygen ion conducting ceramic, specifically a stabilized zirconia membrane which has been fully sintered and is non-porous. This sensor is, however, described only for use in measuring the oxygen content and pH of brines, and the zirconia membrane is shown as extending virtually the entire immersed length of the sensor in order to provide sufficient surface area of membrane in contact with the liquid for measurement to take place. Such a long immersed length would be the subject of rapid chemical and mechanical attack by aggressive Bayer process liquor, and reducing the surface area of the sensor membrane will lead to such a sensor becoming inoperative. In J. Electrochem. Soc. 129 1982 pp. 1445 there is the suggestion of modifying the described Nidrach sensor so that it can act as a reference electrode. But even in its modified form it would still be unsuitable for use with Bayer process liquor.

In the course of researching alternative membranes, the Applicants started to utilize metallic housings, such as those made from Monel (Trade Name), in order to overcome the corrosion and mechanical stability problems of conventional electrochemical potential measurement apparatus, including the sensor described by Nidrach. Initially, internal lining of the whole of the metal housing with an insulating material, such as PTFE, was undertaken, since the conventional wisdom is that for the measurement of electrochemical potentials in liquids the body of the probe immersed in the liquid must be electrically insulating. However, surprisingly, it has been found that a reference electrode will still be operative with a metallic body supporting the membrane in contact with the liquid under test, provided that that metallic body is electrically insulated both from the membrane and from the reference electrode cell itself.

In accordance with the present invention there is provided a reference electrode for use in the measurement of the electrochemical potential of metal in a liquid as defined in claim 1.

In the preferred embodiment of the present invention the liquid to be measured is a caustic liquid and the second porous membrane is resistant to the chemical attack of the caustic liquid and is stable up to a temperature of 300ºC. More preferably the liquid to be measured is Bayer process liquor and the second porous membrane is of sintered zirconia having a sufficiently low content of one or more compounds, such as silica, which produce a glassy phase on sintering, to prevent significant caustic attack at the sintered grain boundaries of the porous membrane. Such a sintered second porous membrane is known as a "frit".

Preferably the sintered zirconia has been partially stabilized by admixing with 3% by weight of yttria, and the electrical impedance across the opposed faces of the second porous membrane is from 0.1 to 1 MOhm, the impedance being measured when the pores of the membrane are substantially filled with electrolyte of the same ionic concentration as the electrolyte of the salt bridge. The upper limit of the impedance of the frit should be about 1 mega-ohm. If the impedance is significantly higher than this then the frit becomes susceptible to noise pick-up from adjacent electrical installations. The lower limit is about 1 kilo-ohm. If the impedance is much lower than this then ionic transfer across the frit may change the concentration of electrolyte within the reference electrode, resulting in a slightly different equilibrium potential for the reference system (e.g. Hg/HgO). However, the frit impedance may decline with time because of exposure to the plant environment. The rate of decrease in impedance is difficult to estimate since the mechanism of decrease is most probably the very slow widening of the pores in the frit. Although this is not an operational problem, it is preferred that the frit impedance should be close to the upper limit, desirably between 0.1 and 1 mega-ohm, thus allowing a maximum lifetime before the frit becomes too "leaky".

Desirably, the ionic strength and ionic composition of the electrolyte in the salt bridge is substantially equivalent to the ionic strength and ionic composition of the caustic liquid in which the electrochemical potential of metal is to be measured. Preferably the support for the second porous membrane is metal and is electrically insulated from the Bayer plant through which the Bayer process liquor is passing.

One embodiment of the present invention will now be described by way of example with reference to the accompanying drawings, in which:-
Figure 1 shows a side sectional view of a reference electrode of the invention for use in a Bayer plant in position in a pipe;
Figure 2 shows a side sectional view of the reference electrode of Figure 1 on its own, but with its drain connection; and
Figure 3 shows for clarity a side sectional view of the mercury cell portion of the reference electrode of Figures 1 and 2, but with its electrical contact wire.

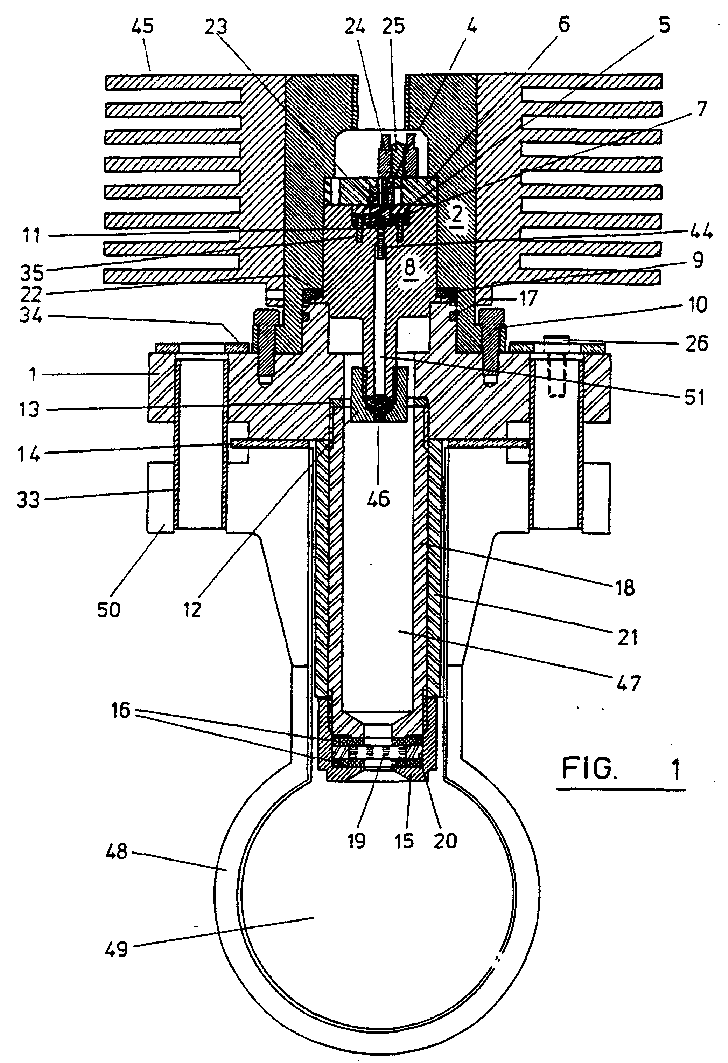

Referring to Figure 1, at a suitable location in a Bayer plant, a pipe 48 carrying Bayer process liquor 49 to be sensed is provided with a flange body 50 around an opening therein, and the reference electrode of the present invention is attached to the body 50 by means of a Monel flange top 1 with an opening therein, aligned with the pipe opening. The main components of the reference electrode are a reference mercury cell 8, a first porous membrane in the form of a plug of ceramic wool 46, an electrolyte-containing salt bridge 47, a second porous membrane in the form of a frit 19, and a support in the form of a retaining cap 15 for the second porous membrane. The reference electrode is generally cylindrical in form and is provided at its outer end with a pressure cap 2 of stainless steel covering the ridged opening in flange top 1. External electrical contact to the reference electrode is provided through an axial opening in the pressure cap 2 to terminal block 24 from which internal connections to the cell 8 lead down through the centres of a PTFE insulator cushion 4 and associated insulator washer 5. This washer 5 is made of a plastics material that can resist the high temperatures of a Bayer plant without degradation and a suitable example is that known as GYLON (Trade Name).

Mercury cell 8 is provided in its outer surface with an axially aligned platinum rod 44 which is connected to terminal block 24 via a cap shaped copper contact 23. The platinum rod 44, the copper contact 23, the insulator cushion 4 and its associated washer 5 are all held in place under the pressure cap 2 and against the outer surface of the mercury cell 8 by a stainless steel reference cell cover plate 6 and associated O-ring clamp plate 7. The clamp plate 7 is secured to a recess in the upper surface of the cell 8 by screws 25. The mercury cell 8 itself uses an Hg/HgO couple and is constructed from PTFE, thereby being electrically insulated from the surrounding components of the reference electrode of the invention, except for its electrical mechanical connection to terminal block 24.

Between the abutting internal surfaces of the pressure cap 2 and the flange top 1 is provided a clamp ring 9 of stainless steel in order to make a seal with the flange of the mercury cell 8, the cap 2 being attached firmly to the flange top 1 by set screws 10. A KALREZ (Trade Name) O-ring 11 is positioned at the top of the mercury cell 8 around the platinum rod 44 along the axis thereof to seal the same thereinto and to prevent the mercury from touching the copper contact 23. Axial sealing of the internal connecting portion of the pressure cap 2 to the ridge of the flange top 1 is effected by means of a lateral VITON (Registered Trade Mark) O-ring 17 in association with an axial brass shim 22 and clamp ring 9 which bears against the flange of the cell 8. Brass shim 22 allows multiple re-assembly of the reference electrode and also serves to counteract any creep experienced by the PTFE body of the mercury cell 8.

The mercury cell 8 extends down into the opening in the flange top 1 and is covered at its lower end by a PTFE cap 12 having an opening axially therein through which liquid electrical contact to the mercury cell 8 is facilitated. The cap 12 passes through a GYLON (Trade Name) sealing washer 13, against which the portion of the reference electrode which extends in the form of a probe into the Bayer process liquor to be sensed is sealed, this probe portion being electrically insulated from the flange top 1 and the remainder of the plant by a GYLON (Trade Name) gasket 14.

The probe portion of the reference electrode comprises a hollow tubular Monel support stud 18 abutting at its upper end the sealing washer 13 and having at its lower end a frit retaining cap 15 also of Monel. The frit 19 of porous sintered zirconia is sealed over an axial opening in retaining cap 15 between the cap and the stud 18 by a pair of GYLON (Trade Name) frit washers 16, an annular PTFE spacer 20 being provided around the frit 19 and between the frit washers 16 in order electrically to insulate the frit 19 from both the end cap 15 and the support stud 18. Liquid electrical contact between the Bayer process liquor in contact with the retaining cap 15 and the interior of the support stud 18 is effected via the frit 19.

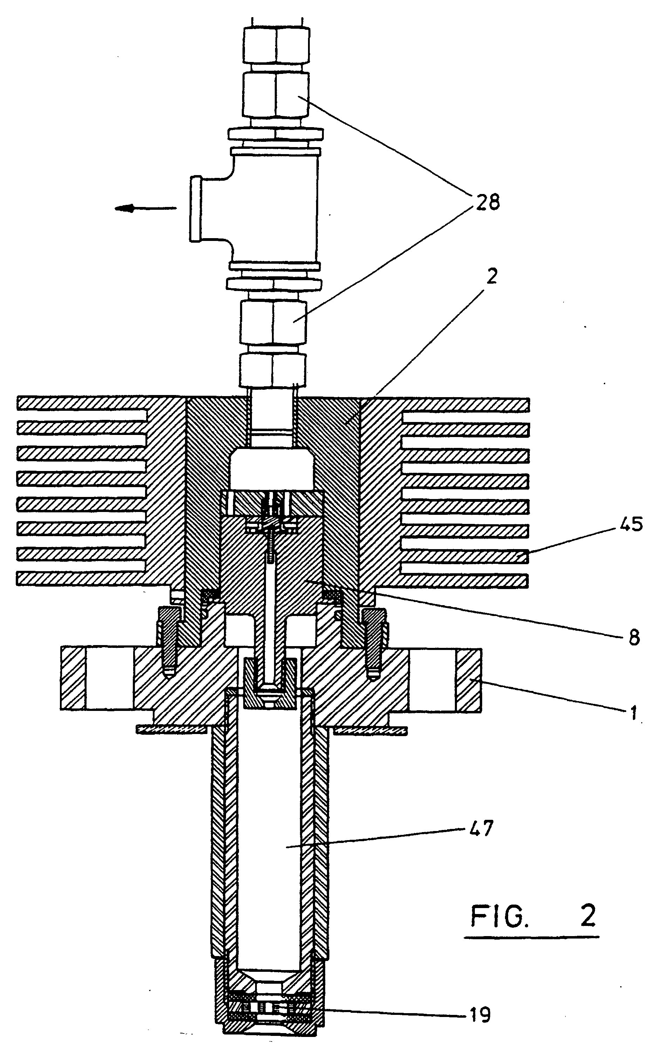

Surrounding the support stud 18, within the flange body 50, is a tubular PTFE sleeve 21 which retains the support stud which provides a soft, space-filling material to help prevent scaling. In use the pressure cap 2 is connected to a drain via a pair of Conax (Trade Name) fittings 28 as shown in Figure 2 in order to allow any leakages from the reference electrode safely to escape. (In Figure 2 the terminal 24 and its screw 25 have been omitted for clarity.)

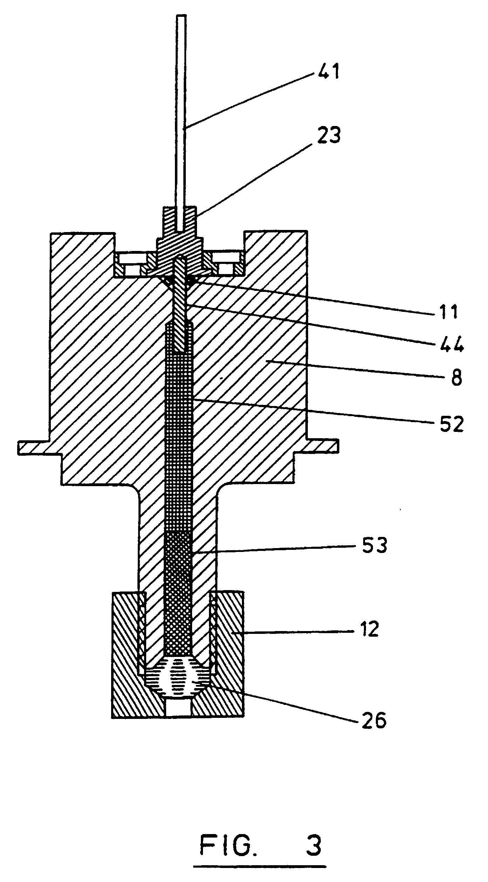

In order to complete the direct electrical connection between the mercury cell 8 via platinum rod 44 to an external electrical terminal block 24 made of nylon retained on the outer surface of cover 6 by stainless screw 25, the copper contact 23 is provided over the end portion of platinum rod 44 where it protrudes beyond the upper surface of mercury cell 8, which contact extends into cover 6 to abut insulator cushion 4. A tinned copper contact wire 41 (see Figure 3) is connected to the contact 23 and extends through the centre of the insulator cushion 4 to the electrical terminal block 24. External electrical connection is made to the terminal block 24 via the centres of the Conax fittings 28 (not shown). In order to provide liquid electrical contact between the mercury cell 8 and the Bayer process liquor 49 flowing through the pipe 48, a bore 51 extends axially through the mercury cell 8 from the platinum rod 44 to the opening in the cell's end cap 12, which bore contains an upper layer of mercury 52 and a lower layer of mercury oxide 53. A plug of ceramic fibre 46 is disposed at the end of bore 51 and held in place by end cap 12 in order to prevent any significant mixing of the content thereof with the liquid contents 47 of the support stud 18, the latter acting as a salt bridge between the mercury cell 8 and the Bayer process liquor 49. Plug 46 also supports the contents of the mercury cell 8 and prevents them from falling out. When the metal of the reference electrode itself is to be used as the second electrode against which the reference electrode is compared then a suitable electrical connection can be made via contact screw 26 in the face of flange top 1.

In order to prevent any electrical contact between the Bayer process liquor pipe 48 and its integral flange body 50 on the one hand and the flange top 1 on the other, the attachment between the flange top 1 and body 50 is by means of tubular-shaped bolt insulators 33 retained by studs (not shown) carrying insulator washers 34. Because the Bayer process liquor 49 and its pipe 48 are at a temperature of approximately 250ºC when the plant is running, the support stud 18 is extended in length and the pressure cap 2 is provided with cooling fins 45 so that the temperature experienced by flange top 1 and the mercury cell 8 retained thereon is not so high as to cause significant degradation of mercury by oxidation.

Not only because of the high temperatures involved, but also because of the aggressive nature of the Bayer process liquor to which the sensor is exposed and the pressure under which it flows, the washers are constructed of GYLON (Trade Name) which is a commercially available filled fluoro-polymer, which is both electrically insulating, relatively flexible and does not creep under load at elevated temperatures, and capable of withstanding the aggressive chemical environment and high temperatures involved in Bayer plants.

The metal chosen for all of the parts in direct contact with the Bayer liquor is Monel, again because of its ability to withstand both the alkaline attack of the Bayer liquor and the acid attack of the periodic cleaning cycles. The salt bridge 47 retained within support stud 18 is preferably a solution of similar ionic strength and ionic composition to the Bayer liquor which is present in the part of the plant to which the electrode is attached, and is generally an appropriate concentration of pure caustic soda solution. This also fixes the potential of the Hg/HgO couple.

Similarly, the frit 19 must be resistant both to severe caustic and acidic conditions, and it has been found that zirconia is one of the best materials for this purpose. It is provided with porosity by being sintered at about 1300ºC and partially stabilized by an admixture of 3% by weight of yttria. Desirably it has an especially low soda content. It has been found that the requisite chemical resistance is achieved by using a high purity zirconia starting material which has a low silica content. Silica or silicates are useful in zirconias in small quantities since they act as a sintering flux, but if there is a significantly high percentage of silica in the powder being sintered, then the silica tends to get deposited at the sintered grain boundaries and then becomes the focus of caustic attack.

In order to function efficiently as a liquid electrical connection between the Bayer process liquor and the salt bridge, it has been found that not only must the zirconia frit be sufficiently porous and have pores of sufficient average size that ionic conduction is possible, but also the size of the pores must not be so great as to allow any significant mass transport of ions across the frit, especially of the aluminate ions present in the Bayer liquor. The extent of the porosity of the frit and the average pore size therein can be controlled by the composition of the particle, the particle size distribution of the starting powder which is isostatically pressed and sintered, but also the temperature and duration of sintering. In order to measure whether a frit has the correct porosity and average pore size, a sample thereof is soaked in a solution of the electrolyte of the salt bridge 47 and then the electrical impedance across the faces of the frit is measured. It has been found that frits with an electrical impedance of about 1 MOhm are suitable for Bayer process liquor of the type normally found in Bayer plants, although other impedances, and hence other porosities and average pore sizes, may be more suitable for other applications.

A frit of controlled porosity suitable for Bayer process liquor was prepared as follows:-
8.5 g of Toyal Soda zirconia TZ3Y in powder form was weighed out and transferred to a 25 mm pelleting die from Specac Limited and was compacted using a Moore press under a pressure of 1 tonne as measured on a 0.1524 m (6 inch) diameter ram. The compact thereby formed was sealed in a plastic bag and then placed in a Stansted uniaxial press and compressed for 30 seconds at a pressure of 1750 bar. The pressure was gradually released so as not to crack the compact, and then a stack of four such compacts one on top of the other was placed on an alumina disc covered with an alumina crucible which did not contact the compacts, in order to prevent contamination. The assembly was then placed in a furnace for sintering and the furnace controls were set to give the following heating cycle: ramp up from ambient at a rate of 5ºC per minute to a set temperature of 1300ºC and hold there for 0.1 minutes. Ramp down from that set temperature at 5ºC per minute to 25ºC, with the sintered compacts being allowed to cool to below 200ºC before removing them from the furnace. The sintered compacts - frits - were found to have an electrical impedence of about 1 MOhm and were suitable for Bayer process liquor.

As regards the selection of the cell for the reference electrode of the present invention, in principle any suitable reference reaction can be chosen, but in practice the Hg/HgO system has been found to give the best and most reliable responses in the described embodiment, wherein the probe-like nature of the components and the cooling fins of the flange body allow the temperature of the mercury cell to be kept down to about 100ºC, thereby avoiding any significant degradation of mercury by oxidation. The silver/silver chloride system could be used instead of a mercury cell, since, although the electrical output of the former varies more with temperature than the latter and suffers from hysterisis during heating-cooling cycles, that variation is predictable and can therefore be allowed for.

It has been found that the reference electrode of the present invention as described has an operative lifetime of several weeks or months in a Bayer plant rather than the hours or days that any known reference electrode is limited to, and it has also been found to be capable of providing a reliable output signal even during the regular acid cleaning cycles. In view of this additional advantage, the reference electrode of the present invention could also be used to control the duration of the acid cleaning cycles in a Bayer plant production operation.

When used to measure the electrochemical potential of metal in Bayer process liquor the reference electrode of the present invention is connected via a suitable measuring device to a metal probe acting as a second electrode. This metal probe can be a metal sample, a metal portion of the Bayer plant, or the metal of the reference electrode itself. The electrochemical corrosion potentials for various metals, such as steels, used in industrial Bayer plants over a temperature range, such as from 130 to 230ºC, can thus be measured.

As examples of the use of the reference electrode of the present invention for liquids other than Bayer process liquor, there can be mentioned the lignin-dissolving liquors in the pulp and paper industry, the gas scrubbing solutions used in the oil and gas industries, and the liquid coolants used in the nuclear industry.

For utilisation in such other environments there are two considerations: viz. the most appropriate reference cell and the most appropriate frit material. Any of the conventional available reference cells could be used with the illustrated reference electrode of the present invention, with only very minor engineering changes. In Table 1 below details of suitable reference electrodes are given, with the reference solution ("Ref Soln") being that used in the salt bridge. In the Table, "Sat" means "saturated" and "SHE" stands for Standard Hydrogen Electrode.

**TABLE 1**

| Ref System | Normal Temp Range | E vs SHE(mV) | Ref Soln | Appl'n |
|---|---|---|---|---|
| Calomel | 0-70ºC | +244 | Sat KCl | General |
| Hg sulphate | 0-70ºC | +658 | Sat K₂SO₄ | Not Cl- |
| Hg oxide | 0-70ºC | +140(1M NaOH) | 0.1-1M NaOH | Alkalis |
| Ag chloride | 0-80ºC | +197 | Sat KCl+AgCl | General |
| Thermag | 0-130ºC | +207 | 3M KCl+AgCl | High temp |

Any of these could be incorporated, but it should be noted that the temperature range that is important is that experienced by the cell and not that of the operating liquid; hence the described use of cooling fins. Many other more possible reference cells exist and can be selected on the basis of the chemistry of the operating liquid. Non-aqueous operating liquids could also be accommodated. For example, the calomel system can be used in non-aqueous environments by filling the reference electrode with an appropriate non-aqueous solvent.

The best frit material would also be dictated by the operating environment and generally a porous ceramic would be selected. Sintered platinum frits exist and are preferred in media which might clog a ceramic frit. Their pore size must be controlled to avoid too much diffusion therethrough.

The reference electrode of the present invention can be used as a part of a conventional on-line corrosion monitoring system and can be employed, as with current reference electrodes, to make conventional three elecrode electrochemical measurements, including linear polarisation, and ac-impedance, as well as open circuit potential measurements.

## Claims

1. A reference electrode for use in the measurement of the electrochemical potential of metal in a liquid (49), which comprises a reference electrode cell (8), a first porous membrane (46), a salt bridge (47), a second porous membrane (19) and a support for the second porous membrane (18), wherein the salt bridge (47) is in liquid electrical contact with the reference electrode cell (8) via the first porous membrane (46), and is in liquid electrical contact with the liquid to be sensed (49) via the second porous membrane (19), **characterised in that** the second porous membrane (19) is resistant to the chemical attack of the liquid (49) and is of sintered zirconia which is substantially free from glassy phases and which has an electrical impedance of from 1 KOhm to 1 MOhm, wherein the average size of the pores of the porous structure is sufficiently large to permit ionic conduction through the membrane, but not so large as to permit significant mass transport of ions therethrough, and **characterised in that** the second porous membrane (19) is electrically insulated from its support (18).

2. A reference electrode as claimed in claim 1 when adapted for use with a caustic liquid wherein the second porous membrane (19) is stable up to 300°C.

3. A reference electrode as claimed in claim 2 when adapted for use with Bayer process liquor.

4. A reference electrode as claimed in any one of the preceding claims wherein the sintered zirconia has been partially stabilized by admixing with 3% by weight of yttria.

5. A reference electrode as claimed in any one of the preceding claims wherein the electrical impedance across the opposed faces of the second porous membrane (19) is from 0.1 to 1 MOhm, the impedance being measured when the pores of the membrane are substantially filled with electrolyte of the same ionic concentration as the electrolyte of the salt bridge (47).

6. A reference electrode as claimed in any one of the preceding claims wherein the ionic strength and ionic composition of the electrolyte in the salt bridge (47) is substantially equivalent to the ionic strength and ionic composition of the liquid (49) in which the electrochemical potential of metal is to be measured.

7. A reference electrode as claimed in any one of the preceding claims wherein the support (18) for the second porous membrane (19) is metal and is electrically insulated from any vessels or pipework (48) in which the liquid (49) resides.

## Patentansprüche

1. Referenzelektrode zur Verwendung bei der Messung des elektrochemischen Potentials von Metall in einer Flüssigkeit (49), die eine Referenzelektrodenzelle (8), eine erste poröse Membran (46), eine Salzbrücke (47), eine zweite poröse Membran (19) und einen Träger (18) für die zweite poröse Membran umfaßt, wobei sich die Salzbrücke (47) über die erste poröse Membran (46) in flüssigem elektrischem Kontakt mit der Referenzelektrodenzelle (8) und über die zweite poröse Membran (19) in flüssigem elektrischem Kontakt mit der zu messenden Flüssigkeit (49) befindet, **dadurch gekennzeichnet, daß** die zweite poröse Membran (19) gegenüber dem chemischen Angriff der Flüssigkeit (49) beständig ist und aus gesintertem Zirconiumoxid besteht, das von glasartigen Phasen im wesentlichen frei ist und eine elektrische Impedanz zwischen 1 kOhm und 1 MOhm aufweist, wobei die mittlere Porengröße der porösen Struktur so groß ist, daß sie eine Ionenleitung durch die Membran gestattet, aber nicht so groß ist, daß sie einen erheblichen Massentransport von Ionen dort hindurch gestattet, und **dadurch gekennzeichnet, daß** die zweite poröse Membran (19) elektrisch von ihrem Träger (18) isoliert ist.

2. Referenzelektrode nach Anspruch 1 nach Anpassung zur Verwendung mit einer ätzenden Flüssigkeit, wobei die zweite poröse Membran (19) bis zu 300°C stabil ist.

3. Referenzelektrode nach Anspruch 2 nach Anpassung zur Verwendung mit Bayer-Prozeßlauge.

4. Referenzelektrode nach einem der vorhergehenden Ansprüche, wobei das gesinterte Zirconiumoxid durch Beimischung von 3 Gew.-% Yttriumoxid teilweise stabilisiert worden ist.

5. Referenzelektrode nach einem der vorhergehenden Ansprüche, wobei die elektrische Impedanz an den gegenüberliegenden Flächen der zweiten porösen Membran (19) zwischen 0,1 und 1 MOhm beträgt, wobei die Impedanz gemessen wird, wenn die Poren der Membran im wesentlichen mit einem Elektrolyten mit der gleichen Ionenkonzentration wie der Elektrolyt des Salzbrücke (47) gefüllt sind.

6. Referenzelektrode nach einem der vorhergehenden Ansprüche, wobei die Ionenstärke und die Ionenzusammensetzung des Elektrolyten in der Salzbrücke (47) im wesentlichen äquivalent zur Ionenstärke und Ionenzusammensetzung der Flüssigkeit (49) sind, in der das elektrochemische Potential eines Metalls gemessen werden soll.

7. Referenzelektrode nach einem der vorhergehenden Ansprüche, wobei der Träger (18) für die zweite poröse Membran (19) aus Metall besteht und elektrisch von allen Gefäßen oder Rohren (48) isoliert ist, in denen sich die Flüssigkeit (49) befindet.

## Revendications

1. Électrode de référence pour utilisation dans la mesure du potentiel électrochimique d'un métal dans un liquide (49), qui comprend une cellule pour l'électrode de référence (8), une première membrane poreuse (46), un pont salin (47), une seconde membrane poreuse (19) et un support pour la deuxième membrane poreuse (18), dans laquelle le pont salin (47) est en contact électrique liquide avec la cellule de l'électrode de référence (8) par l'intermédiaire de la première membrane poreuse (46), et est en contact électrique liquide avec le liquide à tester (49) par l'intermédiaire de la deuxième membrane poreuse (19), **caractérisée en ce que** la deuxième membrane poreuse (19) est résistante aux attaques chimiques du liquide (49) et est en zircone frittée, laquelle est essentiellement libre de phases vitreuses et a une impédance électrique de 1 Kohm à 1 Mohm, dans laquelle la grosseur moyenne des pores de la structure poreuse est suffisamment large pour permettre une conduction ionique au travers de la membrane, mais pas assez large pour permettre le transfert de matière des ions au travers, et **caractérisée en ce qu'**une seconde membrane poreuse (19) est isolée de son support de façon électrique (18).

2. Électrode de référence selon la revendication 1, quand elle est adaptée pour une utilisation avec un liquide caustique dans lequel la deuxième membrane poreuse (19) est stable jusqu'à 300 °C.

3. Électrode de référence selon la revendication 2 quand elle est adaptée pour une utilisation avec une liqueur du procédé Bayer.

4. Électrode de référence selon l'une quelconque des revendications précédentes dans laquelle la zircone frittée a été partiellement stabilisée par mélange avec 3 % en poids d'yttria.

5. Électrode de référence selon l'une quelconque des revendications précédentes, dans laquelle l'impédance électrique des faces opposées de la seconde membrane poreuse (19) varie de 0,1 à 1 Mohm, l'impédance étant mesurée quand les pores de la membrane sont essentiellement remplis avec un électrolyte de la même concentration ionique que l'électrolyte du pont salin (47).

6. Électrode de référence selon l'une quelconque des revendications précédentes, dans laquelle la force ionique et la composition ionique de l'électrolyte dans le pont salin (47) sont essentiellement équivalentes à la force ionique et à la composition ionique du liquide (49) dans lequel le potentiel électrochimique du métal est mesuré.

7. Électrode de référence selon l'une quelconque des revendications précédentes, dans laquelle le support (18) pour la deuxième membrane poreuse (19) est métallique et est isolé du point de vue électrique de tous les contenants ou toute la tuyauterie dans lesquels le liquide (49) repose.
